Europäisches Patentamt

**European Patent Office**

**Office européen des brevets**

(19)

(11) Veröffentlichungsnummer: **0 035 128**
A1

(12) # EUROPÄISCHE PATENTANMELDUNG

(21) Anmeldenummer: 81100842.4

(22) Anmeldetag 06.02.81

(51) Int. Cl.³: **C 01 D 1/42,** C 25 B 1/16,
C 25 B 1/42

(30) Priorität: 03.03.80 DE 3008104

(43) Veröffentlichungstag der Anmeldung: **09.09.81**
**Patentblatt 81/36**

(84) Benannte Vertragsstaaten: **BE DE FR GB IT SE**

(71) Anmelder: **Uhde GmbH, Deggingstrasse 10 - 12,**
**D-4600 Dortmund 1 (DE)**

(72) Erfinder: **Jaeschke, Lothar, Dr., Hansbergstrasse 45,**
**D-4600 Dortmund 1 (DE)**
Erfinder: **Schurig, Helmuth, Dipl.-Ing., Jahnstrasse 26,**
**D-4755 Holzwickede (DE)**
Erfinder: **Isfort, Heinz, Dipl.-Ing., Widumer Strasse 9,**
**D-4600 Dortmund 16 (DE)**

(54) **Verfahren zur Aufkonzentrierung niedrigprozentiger Natronlauge.**

(57) Niedrigprozentige Natronlauge in einer Konzentration von ca. 10 bis 45% ist üblicherweise aus Transportgründen ein kaum marktgängiges Produkt. Sie entstammt in der Regel einer Membranzellenelektrolyse. Das bisher angewandte Verfahren der Aufkonzentrierung machte Dampfeinsatz und Verwendung von korrosionsbeständigem Material erforderlich.

Dies läßt sich vermeiden, wenn die niedrigprozentige Natronlauge einer Quecksilberamalgamzersetzung zugeführt wird, wobei der Wasseranteil der Natronlauge mindestens einen Teil des Reaktionswassers für die Amalgamzersetzung liefert. Die niedrigprozentige Natronlauge kann so auf mindestens 50% aufkonzentriert werden.

ACTORUM AG

Verfahren zur Aufkonzentrierung niedrigprozentiger Natronlauge

---

Die Erfindung betrifft ein Verfahren zur Aufkonzentrierung niedrigprozentiger Natronlauge. Unter niedrigprozentiger Natronlauge ist solche mit einem Konzentrationsbereich von ca. 10 bis 45 % zu verstehen.

Natronlauge in einer 10 bis 45 %igen Konzentration ist üblicherweise aus Transportkostengründen ein kaum marktgängiges Produkt, sondern sie muß mindestens auf 50 % aufkonzentriert werden. Die Aufkonzentrierung erfolgt in der Regel unter Einsatz von Wärmeenergie in Form von Dampf. Außer dem Problem des Wärmebedarfs wird bei der Aufkonzentrierung noch der Einsatz von korrosionsbeständigem Material mit hohen Kosten erforderlich, da das überschüssige Wasser nur bei Temperaturen im Bereich von über 100 °C abgetrieben werden kann. Soll das abgetriebene Wasser wiedergewonnen werden, müssen Wärmetauscher eingesetzt und Kühlmedien bereitgestellt werden.

Der Erfindung liegt die Aufgabe zugrunde, die aufgezeigten Probleme zu mindern bzw. zu beseitigen.

Die Aufgabe wird erfindungsgemäß dadurch gelöst, daß die niedrigprozentige Natronlauge einer Quecksilberamalgamzersetzung zugeführt wird, wobei der Wasseranteil der Natronlauge mindestens einen Teil des Reaktionswassers für die Amalgamzersetzung liefert.

Besonders vorteilhaft ist das erfindungsgemäße Verfahren, wenn die niedrigprozentige Natronlauge einer Membranzellenelektrolyse entstammt und sie durch die neue Maßnahme auf mindestens 50 % aufkonzentriert wird.

Nach einer weiteren Ausgestaltung der Erfindung wird die niedrigprozentige Natronlauge aus der Membranzellenelektrolyse ohne vorherige Abkühlung der Amalgamzersetzung zugeführt.

0035128

Die mit der Erfindung erzielten Vorteile bestehen insbesondere darin, daß für die Aufkonzentrierung der niedrigprozentigen Natronlauge auf mindestens 50 Gew. % keine Fremdwärme erforderlich ist. Darüberhinaus werden keine separaten Apparate aus korrosionsbeständigem Material erforderlich.

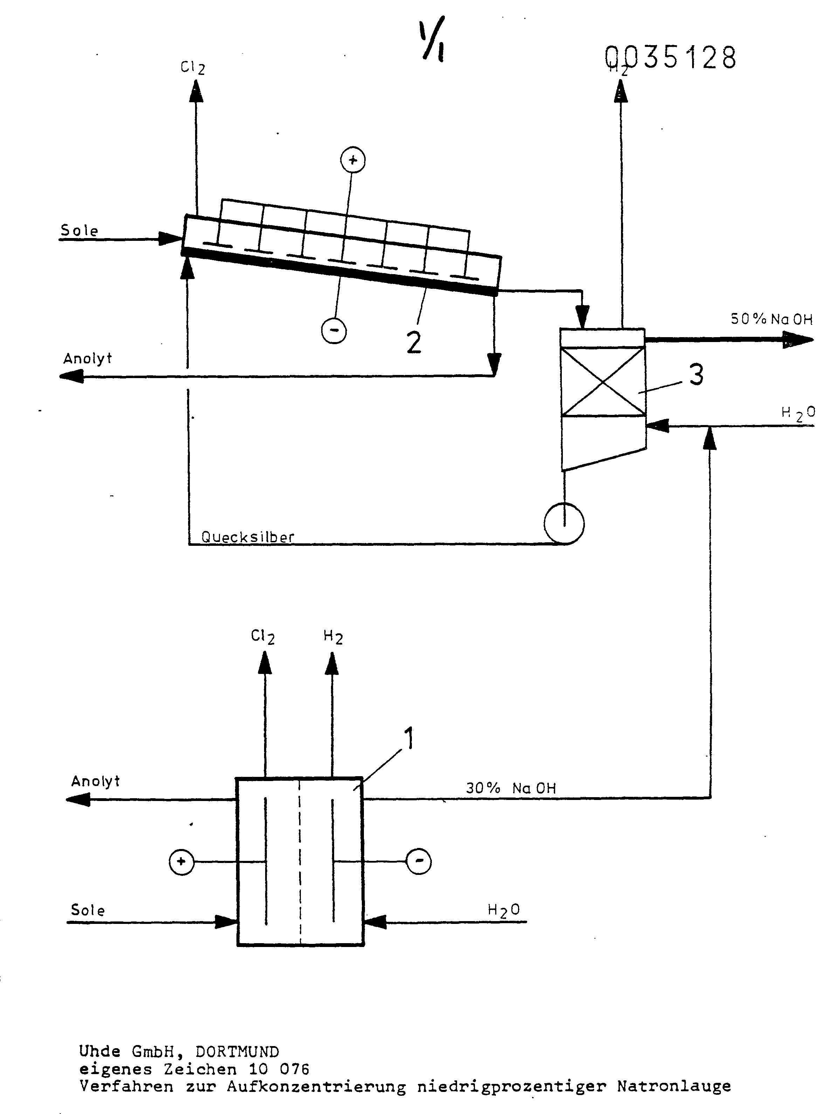

Das Verfahren wird durch das folgende Beispiel in Verbindung mit der Abbildung beschrieben, die ein Fließschema einer bevorzugten Ausführungsform darstellt.

In der Anlage 1 zur Elektrolyse von wässrigem Natriumchlorid, die mit Membranzellen ausgestattet ist, werden pro Tag 333,3 t NaOH als 30 %ige Lösung erzeugt. Diese Menge enthält 100 t NaOH und 233,3 t $H_2O$. Um aus dieser Natronlauge eine solche mit 50 % NaOH herzustellen, wären 133,3 t $H_2O$ zu verdampfen.

Erfindungsgemäß wird diese Verdampfung nicht durchgeführt. Da eine Anlage 2 zur Erzeugung von Chlor, Wasserstoff und Natronlauge auf der Basis einer Quecksilberzellenelektrolyse vorhanden ist, wird folgender Weg beschritten: Die Quecksilberzellenelektrolyse 2 enthält u. a. Amalgamzersetzer 3, denen Wasser als Reaktionswasser zuzuführen ist. So werden pro Tag zur Umsetzung von Amalgam in 1000 t NaOH als 50 %ige Lösung 725 t $H_2O$ erforderlich, wovon 225 t $H_2O$ für die Reaktion $Hg_xNa + H_2O = xHg + NaOH + \frac{1}{2} H_2$ selbst verbraucht werden.

Durch die Zuführung von 333,3 t NaOH als 30 %ige Lösung mit 233,3 t $H_2O$, d. h. 133,3 t $H_2O$ Überschußwasser, müssen nur 725 t $H_2O$ - 133,3 t $H_2O$ = 591,7 t $H_2O$ pro Tag dem Amalgamzersetzer 3 zusätzlich zugeführt werden. Aus dem Amalgamzersetzer 3 werden insgesamt 600 t NaOH als 100 %ig gerechnet, d. h. 1200 t NaOH 50 %ig entnommen.

Wie aus o. g. zu schließen ist, wird durch dieses Verfahren die Eindampfenergie für 133,3 t Wasser aus 30 % zu 50 % Lauge eingespart.

Uhde GmbH, Dortmund
eigenes Zeichen 10 076

P a t e n t a n s p r ü c h e
-------------------------------------

1. Verfahren zur Aufkonzentrierung von niedrigprozentiger
Natronlauge, d a d u r c h   g e k e n n z e i c h n e t ,
daß die niedrigprozentige Natronlauge einer Quecksilberamalgamzersetzung zugeführt wird, wobei der Wasseranteil
der Natronlauge mindestens einen Teil des Reaktionswasser
für die Amalgamzersetzung liefert.

2. Verfahren nach Anspruch 1, d a d u r c h   g e k e n n -
z e i c h n e t , daß die niedrigprozentige Natronlauge
einer Membranzellenelektrolyse entstammt.

3. Verfahren nach Anspruch 1 und 2, d a d u r c h   g e -
k e n n z e i c h n e t , daß die niedrigprozentige Natronlauge auf mindestens 50 % NaOH aufkonzentriert wird.

4. Verfahren nach Anspruch 1 und 2, d a d u r c h   g e -
k e n n z e i c h n e t , daß die niedrigprozentige Natronlauge ohne vorherige Abkühlung der Quecksilberamalgamzersetzung zugeführt wird.

1/1

0035128

Cl₂ → $Cl_2$

Sole

$H_2$

+

−

2

Anolyt

Quecksilber

50% Na OH → $50\% \, NaOH$

3

$H_2O$

$Cl_2$   $H_2$

1

Anolyt

30% Na OH → $30\% \, NaOH$

+   −

Sole   $H_2O$

Uhde GmbH, DORTMUND
eigenes Zeichen 10 076
Verfahren zur Aufkonzentrierung niedrigprozentiger Natronlauge

Europäisches
Patentamt

**EUROPÄISCHER RECHERCHENBERICHT**

Nummer der Anmeldung

EP 81100842.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DD - A - 62 040</u> (DR. HANS HOFMANN) <br><br> + Gesamt + <br><br> ---- | 1-4 |

**KLASSIFIKATION DER ANMELDUNG (Int. Cl.³)**

C 01 D 1/42

C 25 B 1/16

C 25 B 1/42

**RECHERCHIERTE SACHGEBIETE (Int. Cl.³)**

C 01 D

C 25 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt |
|---|---|

| Recherchenort | Abschlußdatum der Recherche | Prüfer |
|---|---|---|
| WIEN | 13-04-1981 | HEIN |

EPA form 1503.1   06.78